# EUROPEAN PATENT APPLICATION

(11) **EP 2 135 854 A2**
(43) Date of publication of application: **23.12.2009**
(21) Application number: 09007958.3
(22) Date of filing: 18.06.2009
(51) Int. Cl.: C05D 3/02, C05F 7/00

(54) **Process for the prodcution of Defecation gypsum for agricultural use, and formulations containing the same**

(30) Priority: 19.06.2008 IT MI20081116
(71) Applicant: Technelep S.R.L., 20152 Milano (MI) (IT)
(72) Inventor: Bobbiesi, Guiseppe, 20152 Milano (IT); Fratoni, Francesco, 20147 Milano (IT)
(74) Representative: Beneduce, Gianna

(57) **Abstract**

A process for the preparation of Defecation Gypsum having high agronomic interest due to its high content of organic substances, such as amino-acids and peptides, practically free from pathogenic substances and its different formulations from biological sludges and/or from other waste materials are described.

## Description

### Brief description of the invention

The present invention refers to a process for the production of the agricultural soil conditioner registered as Defecation Gypsum, in various possible formulations, by alkaline hydrolysis with a calcium chemical selected from calcium oxide and calcium hydroxide, of shovable biological sludges and other proteic non dangerous, nontoxic and non noxious organic wastes, all having a water content of 70-80% and a heavy metal contamination below the stated by law or regulation limits, to mostly obtaining amino-acids and, partly, peptides, where said hydrolysis is stopped at a stated time and pH value to avoid the degradation of the produced amino-acids, then followed by precipitation, by addition and reaction with suphuric acid, under controlled reaction conditions, to avoid damaging of the organic material, so obtaining calcium sulphate dihydrate intimately bound up with particles of hydrolyzed organic matter. During this process pathogenic organisms and microorganisms are eliminated so preparing the material to receive a useful micro-flora, and, furthermore, by the possible admixing of various additives to obtain also various formulations.

### State of the art

Defecation Gypsum is a well-known material, used as an agricultural soild conditioner and obtained from liquid and solid biological masses, such as the byproducts of industrial processes (wastes from papermaking plants, sugar factories, and slaughterhouses), masses wherein the calcium hydroxide contained in the same provokes a hydrolysis of the organic materials; the addition of sulphuric acid to the hydrolyzed organic mass then determines the formation of a low solubility calcium sulphate dihydrate (gypsum) product, which precipitates.

According to the prescriptions of the Italian D.Lgs (Legislative Decree) no. 217/2006, Defecation Gypsum is classified among the "lime and magnesia soild conditioner" and is defined as a "product obtained from a chemical hydrolysis (or enzymatic attack) of biological materials with lime, and its subsequent precipitation with sulphuric acid".

Said biological material must contain at least: 20% of CaO, on a dry basis; 15% of SO₃ on a dry basis; 10% of C_{org} on a dry basis; and 1% of Nₜₒₜ on a dry basis, at least 50% of which is to be present in an organic form.

As regards the effect on vegetables, the Defecation Gypsum's main function is to supply them with calcium and sulfur. Calcium fulfils various functions: it is a component of cellular membranes and walls, activates numerous enzymes, neutralizes organic acids and slows down ageing of the vegetables including the garden products and fruits. Sulphur is an element essential for the constitution of three of the twenty known amino-acids (cystine, cysteine, methionine). Many agricultural species need sulphur percentages of the same order as phosphorus.

Thanks to its organic matrix, Defecation Gypsum also has the capacity of retaining microelements, even in chelated form, and is therefore a good purveyor of microelements, such as iron, zinc and manganese, that are essential for vegetables. The proteic material, present in gypsum, may be of various origins (animal, vegetable, microbial) in the form of proteins, denature proteins, peptides and amino-acids.

The Italian patent application no. PC 2005 A000061 describes a plant for the production of a soil conditioner or Defecation Gypsum constituted of an electrokinetic separator for extracting contaminants such as heavy metals and undesirable anions from biological masses, and of a chemical reactor. In this plant, some suspicion of poor reliability is aroused by the low technological standard of the equipment employed, and by the declared application of an electrokinetic process unsuitable for the physical conditions of the materials, as well as by the total absence of specific technical data.

It is also known that the chemical hydrolysis reaction, under alkaline conditions, useful for the production of Defecation Gypsum, leads to a break-up of the peptide bonds in the protein, with the resulting formation of fragments corrisponding to peptides. If the reaction is driven on further, a break-up of all the peptide bonds and a release of amino-acids will ensue.

One of the undesirable effects of a chemical protein hydrolysis, under basic conditions, is the destruction of the amino-acids cysteine, serine, treonine and arginine, and the partial deamination and racemization of the remaining amino-acids. This determines, from an agronomical viewpoint, a decay of the value of the organic matter and thus of the Defecation Gypsum obtained.

### Detailed description of the invention

The process object of the present invention essentially consists of two stages: a first stage with an alkaline hydrolysis of the starting sludge, and a second stage with a precipitation of calcium sulphate dihydrate, intimately linked to particles of organic matter, which actually constitutes the Defecation Gypsum of this invention.

The first stage starts from a biological sludge with available analyses, or, in case, from other materials, including a protein analysis, said sludge being selected for its low heavy metal and organic pollutant content, optionally also thanks to certain pretreatments and a previous stabilization and thus partially hydrolyzed, and/or also from other materials or organic wastes such as, but not exclusively, indicated in the following list whose numerical references correspond to the respective European Waste Codes (CER):
20101 - sludges from washing and cleaning operations;
020106 - animal feces, urines and dung (including used litters), effluents that have been separately collected and treated off-site;
020107 - forestry wastes;
020201 - sludges from washing and cleaning operations;
020204 - sludges produced by treating effluents on the spot;
020301 - sludges produced by washing, cleaning, peeling, centrifuging and separating of components;
020304 - waste material unusable for consumption or conversion;
020305 - sludges produced by treating effluents on the spot;
020403 - sludges produced by treating effluents on the spot;
020502 - sludges produced by treating effluents on the spot;
020603 - sludges produced by treating effluents on the spot;
020705 - sludges produced by treating effluents on the spot;
030305 - sludges produced by de-inking processes in recycling paper;
030309 - waste sludges containing calcium carbonate;
030310 - fibrous and sludgy wastes containing fibers, fillers and coating materials generated by mechanical separation processes;
030311 - sludges produced by treatment of effluents on-the-spot other than those listed fewer than 030310;
040107 - sludges especially if produced by the treatment of effluents on-the-spot, non containing chrome;
040220 - sludges produced by treatment of effluents on-the-spot other than those listed fewer than 040219;
040221 - waste material of raw textile fibers;
060314 - salts and their solutions, other than those listed fewer than 060311 and 060313;
060503 - sludges produced by treatment of effluents on-the-spot other than those listed fewer than 060502;
060603 - waste materials containing sulfides, other than those listed fewer than 060602;
061101 - waste products from reactions based on calcium in the production of titanium dioxide;
070612 - sludges produced by treatment of effluents on-the-spot other than those listed fewer than 070611;
190606 - digest produced by the anaerobic treatment of waste of animal or vegetable origin;
190805 - sludges produced by treating municipal sewage;
190812 - sludges produced by the biological treatment of industrial waste waters, other than those listed under 190811;
190814 - sludges produced by other treatments of industrial waste waters, other than those listed under 190813;
070712 - sludges produced by treating effluents on the spot, other than those under 070711;
070212 - sludges produced by treating effluents on the spot, other than those under 070211;
070512 - sludges produced by treating effluents on the spot, other than those under 070511;
   operating with high efficiency mixers for solids and liquids and, optionally, with several passes through the same to obtain the necessary intensive and intimate mixing and with appropriate periods of time, an intimate mixing between the particles of sludge and the calcium hydroxide or the calcium oxide, in granules of an appropriate size, is achieved. In the case carbon oxide is used, first the hydration of the calcium oxide occurs thanks to the water present in the sludges and other organic waste materials, under a rapid exothermic reaction that causes a partial evaporation of other water present in the sludge and in the remaining organic wastes, with the possible emission of volatile substances that are captured and precipitated in suitable scrubber with an acid solution, due to sulphuric acid.

The degree of intimate mixing, which is an essential factor for the purposes of the reaction and or the quality of the final product, is controlled sample-wise, by picking up small 1g samples (at least 5) from various points of the mass and measuring the pH of the individual samples diluted with 9g of water with a sensitive pH-meter: the mixing is held to be acceptable when all the samples evidence a deviation of not over 0.2 pH-values. The water needed for hydrolysis (one molecule for each two molecules of peptides or amino-acids formed) is also taken from the water contained in the sludges and/or in the waste.

In the case of using of calcium oxide the water is thus in the overall subtracted twice: a first time to form the calcium hydroxide, and a second time for the hydrolysis reactions, with the final result of achieving a drier material.

The temperature of the reaction mass is monitored and maintained in a range of 40 - 60°C so as to prevent the hydrolysis from proceeding beyond the formation of amino-acids, thus degrading also the same.

The hydrolysis reaction of the proteic material (a slow reaction) occurs over a time period of 12 - 24 hours within the temperature range mentioned above and a pH-range of 8 - 9, preferably 8.5, being the value attained by adding the calcium chemical in a quantity sufficient for attaining a 20 - 22% concentration of CaO in the finished product.

Considering these relatively long time periods, the reaction in the mixer is started, but only completed on the pad, so as to not necessarily have to provide mixers of an extremely large size with respect to the volumes of gypsum produced. Arranging the material on a pad also allows a better chance of monitoring the temperature and maintaining it within limits, if necessary, by simply turning the material over with a mechanical shovel.

The first reaction that occurs is the following:

CaO + H2O → Ca (OH)₂ + heat

The alcaline conditions, due to Ca(OH)₂, favour the hydrolysis so as to obtain mostly amino-acids and, partly peptides.

In the case of using calcium hydroxide this is prepared in a dedicated tank in the plant, wherein water is added to CaO.

The relatively high pH value upheld for a period of 12 - 24 hours involves eliminating pathogenic organisms and microorganisms and preconditions the product, after a subsequent neutralization stage, to become an excellent nutritional basis for a useful microflora, which is also well suited for an enriching, if any, with a microflora specialized for agronomic useful activities.

In the second stage of the process, the reaction of precipitating with sulphuric acid (neutralization) of the gypsum is a reaction of a fast kinetic and exothermic nature.

The addition of the acid is done on an already hydrolyzed mass, obtained as above, by mixing it in a mixer at controlled quantity and distribution conditions, based on the characteristics of the mass to be neutralized and so as to prevent an excessive evolution of heat, thus maintaining the temperature around 40 - 50°C to avoid degrading the organic matter. The sulphuric acid is used in diluted form, about (33%), so as to avoid an excessively rapid kinetic and allow the reaction to be more easily controlled.

Even in this case, the proper mixing level is determined by analyzing the pH on 5 samples, as described above.

The neutralization is carried forward until reaching a pH in the range of 6.5 - 7.5, according to the desired formulation.

Also in this case, the reaction started in the mixer is completed on the ground on a pad, while monitoring the temperature and its controlling, where needed, by turning the mass over with a mechanical shovel.

The main reaction occurring is:

Ca (OH)₂ + H₂SO₄ = Ca SO₄.2H₂O + heat

From the viewpoint of the water, there is a slight addition due to the usage of diluted sulphuric acid, but not due to the reactions. Said addition is however small and cannot compensate the water removed in the foregoing stage, so that the final overall result of the process is at any rate a reduction of the product's initial moisture content of the finished product with respect to that of the original raw materials at start.

It is, both in the mixtures of the materials undergoing the hydrolysis and in the hydrolyzed mass, where the precipitation induced by the action of the sulphuric acid occurs, possible, and even appropriate in order to achieve a specific enrichment of the final product, to add other materials, if any, including certain special, non organic waste materials corresponding to the following CER codes and auxiliary materials:
060314 - salts and their solutions, other than those already listed fewer than 060311 and 060313;
060503 - sludges produced by treatment of effluents on-the-spot other than those listed fewer than 060502;
060603 - waste materials containing sulfides, other than those listed under 060602;
061101 - waste materials originating from calcium-based reactions during the production of titanium dioxide;
100105 - solid wastes produced by calcium-based reactions in exhaust gas desulphurizing processes;
100107 - sludgy waste products produced by calcium-based reactions in exhaust gas desulphurizing processes;
100324 - waste materials produced when treating exhaust gases, other than those under 100323;
101210 - solid wastes produced when treating exhaust gases, other than those listed under 101209;
100121 - sludges produced by the treatment of effluents on-the-spot, other than those listed under 100120;
101120 - solid wasted produced by the treatment of effluents on-the-spot, other than those under 101119;
101213 - sludges produced by treating effluents on the spot;
190903 - sludges produced by decarbonation processes;
   as well as auxiliaries such as: calcium carbonate powder; dolomite powder; sulphur powder; ferrous sulphate; and phosphorite powder;

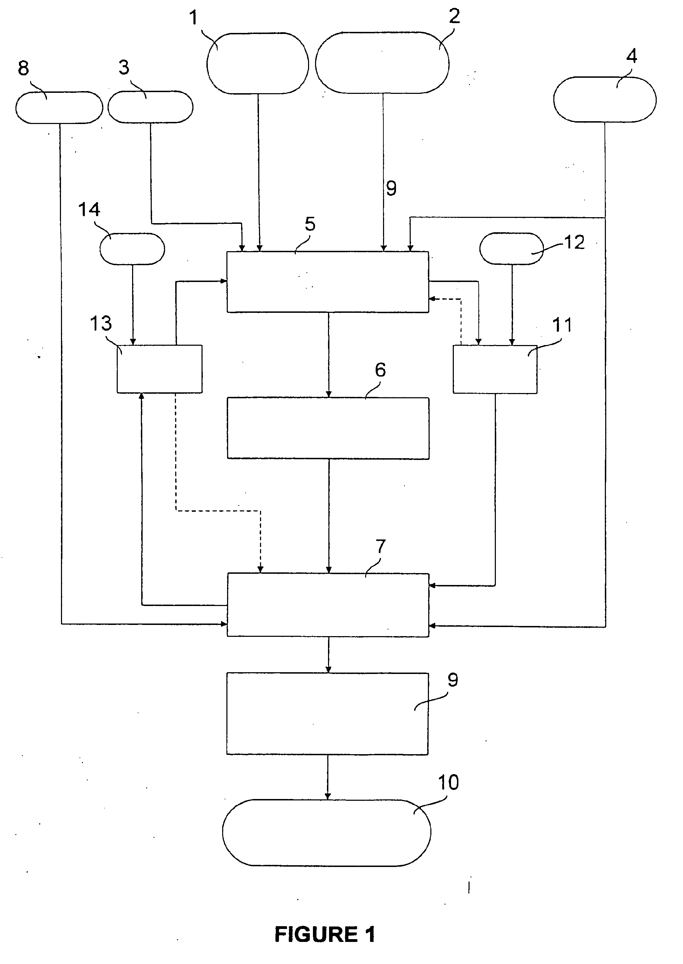

The process of the present invention, as described in its fundamental operations, is schematically shown in the block diagram represented in Figure 1, in the alternative of two separated mixing stages (5) and (7).

The sludges selected with other organic wastes (1), together with other special, non organic wastes (2), a calcium chemical selected from calcium oxide and, preferably, calcium hydroxide (3) and optionally inert and/or reactive substances are, after appropriate weighing, conveyed to a first mixing stage (5) effected in a high efficiency mixer for the mixing of the supplied materials. The intimate mixing thus achieved highly favours the course of the reactions involved, all the way up to the formation of the desired Defecation Gypsum.

The product obtained in said first mixing stage (5) is discharged to a heap where the hydrolysis (6), already initiated in the mixing stage (5), takes place. The product of this heap is, after the above mentioned retention period, conveyed to a second mixing stage (7) where an appropriately metered quantity of sulphuric acid (8), coming from a suitable storage tank, is added.

The process may operate in a batch-type or in continous manner: the mixer in which the second mixing (7) occurs may be the same wherein the first mixing (5) occurred.

As an alternative, the second mixing (7) can of course be effected in a second mixer having the same characteristics as the first one, and thus coming to operate in series to the same.

Downstream of this second mixing stage (7), the product obtained is discharged onto a heap (9) where the precipitation of the calcium sulphate dihydrate, which already started during the mixing stage (7),occurs. The desired final product is then moved to the storehouse (10).

The vapours released during the first mixing stage (5) are sucked and treated with an acid solution: when exhausted, this solution is conveyed to the second mixing stage (7) and replaced by the make-up solution (12). The washed vapours are returned to the first mixing stage (5), to a position in the mixer such as to favour the extraction of the vapours forming there. A suitable aspirator (not indicated in Figure 1) allows recycling the air.

In a similar manner, the vapours released during the second mixing stage (7) are sucked and conveyed to a washing stage (13) (basic scrubber) with a basic solution: when exhausted, said solution is conveyed to the first mixing stage (5) and replaced by the make-up solution (14). The washed vapours are returned to the second mixing stage (7) to a position, in the mixer, such as to favour the extraction of the vapours forming there. A suitable aspirator (not shown in Figure 1) allows recycling the air. If the two mixing stages (5) and (7) occur in the same mixer at different times, the aspirator is a single unit. If the two mixing stages are on the other hand occurring in two different mixers, the aspirators are two, one for each mixer.

According to the plant capacity the mixers of the mixing stages (5) and (7) may also be more than two, also operating in parallel.

The control of the hydrolysis process of the proteic material and of the quality of the finished product is effected, as regards the organic material, optionally also on samples taken at appropriate time intervals, according to the following methods:

### 1. Control of the proteic charge by using the biuret method

This reaction is negative with the amino-acids and dipeptides, but positive with the tripeptides, polypeptides and proteins (violet colour). (It is thus capable of determining the proteins and/or their fragments)

### 2. Determination of the degree of hydrolysis (Adler-Nissen method)

The degree of hydrolysis, meaning the proportion of the peptide bonds of the proteic substrate broken-up by the hydrolysis process, is determined by a spectrophotometric method using 2,4,6 trinitrobenzensulphonic acid, while utilizing leucine as a standard.

### 3. HPLC, on ion exchange columns, chromatography

This allows determining the level of the amino-acids in the finished product, or at predetermined times of the hydrolysis process (it thus determines the quantity of amino-acids).

### 4. HPLC, on molecolar exclusion columns, chromatography

In order to obtain further data, if any, when a more accurate characterization of the product is prescribed, the HPLC, on molecular exclusion columns, chromatography can be recurred to, as it allows determining the level of peptides in the finished product.

It is thus possible, by recurring to the above, to determine proteins, peptides and amino-acids.

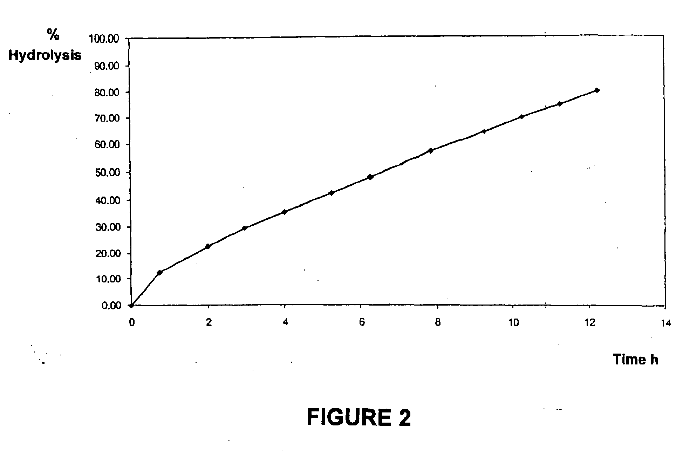

Figure 2 shows an example of hydrolysis reaction kinetic performed under the above described conditions.

## Claims

1. A process for the preparation of Defecation Gypsum and its possible formulations with other appropriate, agronomically useful substances, auxiliary materials and additives, **characterized by** the fact that a biological sludge with a low heavy metal and organic pollutant contamination, optionally chosen among the mentioned CER, is thoroughly mixed with a calcium chemical selected from calcium hydroxide and calcium oxide at a temperature of 40 to 60°C, for a period of 12 to 24 hours, while maintaining the pH of the reaction mixture at a value between 8 and 9, and subsequently mixed with dilute sulphuric acid at pH comprised between 6.5 and 7.5 at a temperature of 40 to 50°C so as to form a precipitate constituted of calcium sulphate dihydrate intimately bonded to particles of organic matter and that other agronomically useful substances can be optionally added during the mentioned hydrolysis and precipitation stages.

2. A process for the preparation of Defecation Gypsum and its possible formulations with other appropriate, agronomically useful substances, auxiliary materials and additives, **characterized by** the fact that a biological sludge with a low heavy metal and organic pollutant contamination, optionally chosen among the mentioned CER, is thoroughly mixed with calcium hydroxide at a temperature of 40 to 60°C, for a period of 12 to 24 hours, while maintaining the pH of the reaction mixture at a value between 8 and 9, and subsequently mixed with dilute sulphuric acid at pH comprised between 6.5 and 7.5 at a temperature of 40 to 50°C so as to form a precipitate constituted of calcium sulphate dihydrate intimately bonded to particles of organic matter and that other agronomically useful substances can be optionally added during the mentioned hydrolysis and/or precipitation stages.

3. A process for the preparation of Defecation Gypsum and its possible formulations with other appropriate, agronomically useful substances, auxiliary materials and additives according to claim 1 or 2, **characterized by** the fact that the starting sludge is mixed with a calcium chemical at a temperature of 45°C while maintaining the pH of the reaction mixture at the value of 8,5 and that the concentration of the sulphuric acid is 33%.

4. A Defecation Gypsum and its possible formulations with other appropriate, agronomically useful substances, auxiliary materials and additives rich in calcium, sulphur and amino-acids capable of being directly absorbed by the plants as well as peptides, practically free of pathogenic microorganisms and thus having a high agronomic value for the plants and microorganisms in the soil, **characterized by** the fact that it is prepared according to the process of in anyone of the previous claims.
